# EUROPÄISCHE PATENTSCHRIFT

(11) **EP 1 617 983 B1**
(45) Veröffentlichungstag und Bekanntmachung des Hinweises auf die Patenterteilung: **21.10.2009**
(21) Anmeldenummer: 04709133.5
(22) Anmeldetag: 07.02.2004
(51) Int. Cl.: B29C 45/76, B29C 47/08, B29C 47/92, G05B 19/042

(54) **IDENTIFIKATION VON MODULAREN MASCHINENANBAUTEILEN**
IDENTIFICATION OF MODULAR MACHINE ADD-ON PIECES
IDENTIFICATION DE COMPOSANTS DE MACHINES MODULAIRES

(30) Priorität: 27.02.2003 DE 10308386
(43) Veröffentlichungstag der Anmeldung: 25.01.2006
(73) Patentinhaber: Sumitomo (SHI) Demag Plastics Machinery GmbH, 90571 Schwaig (DE)
(72) Erfinder: DACHS, Oswald, 90452 Eckental (DE); LÜTTICH, Karl, Rudolf, 06567 Bad Frankenhausen (DE); WARNECKE, Gerd, 06618 Naumburg (DE)
(74) Vertreter: Rau, Manfred
(86) Internationale Anmeldenummer: PCT/EP2004/001130
(87) Internationale Veröffentlichungsnummer: WO 2004/076143

(56) Entgegenhaltungen:
- EP-A- 0 447 233
- EP-A- 1 106 557
- WO-A-02/04186
- AT-B- 386 983
- DE-A- 3 710 605
- DE-A- 10 039 093
- DE-C- 19 744 443
- DE-U- 29 723 770
- US-A- 5 536 159
- US-B1- 6 394 353
- KAZMER D O ET AL: "POLYMER INJECTION MOLDING TECHNOLOGY FOR THE NEXT MILLENIUM: A VISION TO THE FUTURE" JOURNAL OF INJECTION MOLDING TECHNOLOGY, SOCIETY OF PLASTICS ENGINEERS, BROOKFIELD, CT, US, Bd. 1, Nr. 2, 1. Juni 1997 (1997-06-01), Seiten 81-90, XP000765604 ISSN: 1533-905X
- "WENIGER KABEL, MEHR LEISTUNG, WENIGER KOSTEN" PLASTVERARBEITER, ZECHNER UND HUETHIG VERLAG GMBH. SPEYER/RHEIN, DE, Bd. 47, Nr. 10, 1. Oktober 1996 (1996-10-01), Seite 68,70, XP000691212 ISSN: 0032-1338

## Beschreibung

Die vorliegende Erfindung betrifft eine kunststoffverarbeitende Maschine, insbesondere eine Spritzgießmaschine oder einen Extruder gemäß dem Oberbegriff des Anspruchs 1.

Aus der DE 199 58 790 C2 ist eine Maschine zur Herstellung von Teilen aus Kunststoff oder Gummi bekannt, bei der eine Elektronikeinheit in einem Stecker an der Maschine angebracht ist, die einen Teil der Regelvorrichtung der Maschine bildet und die Temperatur-Istwerterfassung mit Linearisierung und Kaltstellen-Kompensation übernimmt. Die Verbindung zwischen Elektronikeinheit und Regelvorrichtung erfolgt über einen Feldbus.

Aus der DE 100 39 093 A1 ist eine Steuereinrichtung für eine Spinnvorrichtung zur Herstellung von synthetischen Fäden sowie ein Verfahren zum Steuern einer solchen bekannt. Hierbei ist jedem Prozessschritt eine Prozesssteuereinheit zugeordnet, die jeweils ein entsprechendes Prozessaggregat steuert. Jedem Prozessaggregat ist ein Adresscode zugeordnet, der durch die zugehörige Prozesssteuereinheit eingelesen wird. Alle Prozesssteuereinheiten sind mit einer zentralen Maschinensteuereinheit verbunden. Anhand der Adresscodes werden in der Maschinensteuereinheit die einzelnen Prozesssteuereinheiten und die zugehörigen Prozessaggregate identifiziert und angesprochen.

Bei Werkzeugmaschinen wie beispielsweise CNC-Fräsmaschinen oder Pressen kommen im Laufe zunehmender Automatisierung auch sogenannte automatische Werkzeugerkennungssysteme zum Einsatz. Darunter versteht man die Kodierung von Wechselwerkzeugen mittels eines Chips, der entweder nur die Werkzeugnummer enthält, während die CNC die werkzeugspezifischen Parameter zu dieser Werkzeugnummer hinterlegt hat, oder aber gleich die werkzeugspezifischen Parameter selbst. Ein solches System ist beispielsweise in der "interbus applications", Ausgabe 02/1998, des INTERBUS Club beschrieben. Durch die automatische Werkzeugerkennung wird eine Verbesserung und Flexibilisierung der früher zum Einsatz kommenden sogenannten Platzkodierung erzielt, bei der jedem Werkzeug genau ein Platz zugewiesen ist, an dem es abgelegt wird. Der Aufwand, jedes Werkzeug mit einem eigenen Chip und die Maschine selbst mit einer entsprechende Lesestation auszurüsten, ist nur aufgrund der bei Werkzeugmaschinen sehr häufig erfolgenden Werkzeugwechsel rentabel.

Kunststoffverarbeitende Maschinen weisen im allgemeinen eine Vielzahl von teilweise sehr komplexen Bauteilen auf, zu denen unter anderen eine Schließeinheit, eine Zuführ- und Dosiervorrichtung, eine Plastifiziereinheit bzw. ein Extruder zählen können. Innerhalb dieser Bauteile sind meist unterschiedliche Konfigurationen von Elementen möglich, deren spezifische Parameter jeweils bei einer Ansteuerung des Bauteils von einer Steuerungsvorrichtung der Maschine berücksichtigt werden müssen. So wird in einer Plastifiziereinheit oder einem Extruder beispielsweise mittels einer sich in einem Schneckenzylinder drehenden Schnecke das zu verarbeitende Material plastifiziert und durchmischt. Je nach Bedarf können kunststoffverarbeitende Maschinen mit unterschiedlichen. Konfigurationen zwischen Schneckenzylinder und zum Einsatz kommender Schnecke ausgerüstet werden, die ihrerseits wieder eigene Charakteristika aufweisen. Im Gegensatz zu Werkzeugmaschinen handelt es sich jedoch hierbei jeweils um eine Konfiguration, die nicht häufig verändert wird.

Für die Auswahl von Schnecke und Zylinder entscheidende Kriterien sind unter anderem der vorgesehene Einsatzbereich und die Beschaffenheit des zu verarbeitenden Materials. Von der Wahl der Konfiguration hängt beispielsweise das maximal übertragbare Drehmoment, die maximal aufbringbare Drehzahl, der maximal aufbringbare Spritzdruck und der maximale Einspritzweg ab. Dies sind nur einige der Größen, die von der Beschaffenheit der Schnecke, wie beispielsweise der Anzahl und Form der Nuten und dem Längen-/Durchmesserverhältnis, und den Eigenschaften des verwendeten Zylinders bestimmt werden. Typische Charakteristika eines Zylinders sind beispielsweise der Durchmesser, die Oberflächenbeschaffenheit, die Anzahl der. Mantelheizzonen, d. h. die Anzahl der separat ansteuerbaren, beheizbaren Bereiche entlang der Längserstreckung des Zylinders, die dort jeweils erbringbare Heiz- bzw. Kühlleistung, Art und Charakteristika der als Temperatursensoren eingesetzten Thermoelemente, um nur einige zu nennen. In Abstimmung mit der zum Einsatz kommenden Schnecke und dem Zylinder sowie dem zu prozessierenden Material werden sodann die möglichen Einsatzbereiche einer Schnecken-Zylinder-Kombination festgelegt.

Da alle bauteilspezifischen Parameter bei einer korrekten Ansteuerung eines Bauteils durch eine Steuerungseinrichtung einer kunststoffverarbeitenden Maschine berücksichtigt werden müssen, muss bei der Auslieferung für jede mögliche Bauteil-Konfiguration eine separate Anpassung der in der Steuerungseinrichtung ablaufenden Steuerungsprogramme erfolgen. Dies bedeutet beispielsweise in Bezug auf die Plastifiziereinheit, die in vielen verschiedenen Schnecken-Zylinder-Konfigurationen zum Einsatz kommen kann, einen sehr hohen Programmieraufwand für jede ausgelieferte Maschine. Aber auch bei eventuellen Änderungen einer bestehenden Schnecken-Zylinder-Konfiguration, wie sie im Ausnahmefall bei Materialwechseln, aber insbesondere auch beim Austauschen von defekten oder abgenutzten Schnecken durch neue vorkommen kann, ist dies ein schwerwiegender Nachteil. Die ständige Anpassung der Steuerungssoftware birgt zudem weitere Fehlerquellen, wie jede Änderung bestehender Software.

Erschwerend kommt hinzu, dass durch diesen speziellen Anpassungsbedarf bislang der Einsatz einer einheitlichen Steuerungssoftware nicht möglich war, die für alle angebotenen Bauteile, die für die verschiedenen Kunden in einer Maschine nach einer Art Baukastenprinzip zusammengestellt werden, und insbesondere für unterschiedliche Schnecken-Zylinder-Konfigurationen einsetzbar wäre. Dies ist jedoch insbesondere für gewisse Durchmesserbereiche in Bezug auf die Schnecke, gepaart mit gewissen zweiten Durchmesserbereichen in Bezug auf den Zylinder von großem Interesse.

Ein weiterer Nachteil besteht insbesondere bei Schnecken-Zylinder-Konfigurationen darin, dass bei Änderung der eingesetzten Mantelheizzonen, und vor allem bei Überschreiten einer bestimmten standardmäßig vorgesehenen Normanzahl, aufwändige Umverdrahtungen notwendig werden, um mithilfe einer Ausgleichsverdrahtung eine korrekte Temperaturkompensation zu gewährleisten. Eine solche Temperaturkompensation wird beim Einsatz von Thermoelementen als Temperatursensoren nötig, um eine Verfälschung der von den Thermoelementen gelieferten Spannung zu vermeiden.

Aufgabe der vorliegenden Erfindung ist es deshalb, eine Möglichkeit zu schaffen, vielfältige Bauteile in spezifischer Konfiguration, insbesondere Plastifizier- und Einspritzeinheiten mit verschiedenartigen Schnecken-Zylinder-Konfigurationen, in kunststoffverarbeitenden Maschinen bei geringem Programmanpassungsaufwand einsetzbar zu machen, wobei eine möglichst konfigurationsunabhängige, globale Steuerungssoftware verwendet werden kann.

Diese Aufgabe wird durch eine kunststoffverarbeitende Maschine gemäß dem Patentanspruch 1 gelöst. In den abhängigen Ansprüchen werden weitere vorteilhafte Ausgestaltungen vorgestellt.

Erfingdungsgemäß wird für ein durch spezifische Parameter gekennzeichnetes Bauteil einer kunststoffverarbeitenden Maschine, das zur Durchführung zumindest eines Arbeits- bzw. Verfahrensschrittes herangezogen wird, und dessen bauteilspezifische Parameter bei der Ansteuerung dieses Bauteils durch eine Steuerungseinrichtung der kunststoffverarbeitenden Maschine als Parameter in ein auf dieser laufendes Steuerungsprogramm eingehen, eine separate Speichereinrichtung für dieses Bauteil vorgesehen, in der die bauteilspezifischen Parameter abgelegt sind, und aus der diese Parameter vor oder bei Inbetriebnahme des Bauteils an die Steuerungseinrichtung übermittelbar sind. So lässt sich erreichen, dass keine separate Anpassung des Steuerungsprogramms an das spezifisch verwendete Bauteil, beispielsweise über Hardcodierung der bauteilspezifischen Parameter, im Vorfeld notwendig ist, sondern eine globale Steuerungssoftware eingesetzt werden kann, die ihre Ansteuerungsaufgaben gemäß der ihr übermittelten bauteilspezifischen Parameter ausführt. Bei den bauteilspezifischen Parametern handelt es sich insbesondere um Sensor- und/oder Aktuatorkennzahlen, wie dies beispielsweise Art und Beschaffenheit von als Temperatursensoren zum Einsatz kommenden Thermoelementen, Durchmesser von Zylindern, Anzahl der Nuten einer Schnecke, maximal aufbringbares Drehmoment, maximaler Einspritzweg, maximale Temperatur etc. sein können. Von diesen Parametern hängt unter anderem ab, welche Heizleistung von der Steuerung in welcher Mantelheizzone aufgebracht werden muss, welches Drehmoment beim Anfahren zu wählen ist, und vieles mehr.

In einer besonders bevorzugten Ausführungsform ist am entsprechenden Bauteil eine Steckverbindung, insbesondere ein Steckkontakt bzw. eine Buchse einer solchen vorgesehen, in die die Speichereinrichtung integriert ist. Der Vorteil bei der Verwendung eines solchen Steckkontaktes zum Aufnehmen der Speichereinrichtung liegt darin, dass er einerseits leicht zugänglich ist, und andererseits bereits die Möglichkeit für die Herstellung einer Verbindung zwischen der Steuerungseinrichtung und dem zumindest einen Bauteil sowie der ihm zugeordneten Speichereinrichtung bereitstellt. Es sind also keine zusätzlichen Anbindungen für die Speichereinrichtung notwendig.

Normalerweise wird die Verbindung zwischen der Steuerungseinrichtung und dem zumindest einen Bauteil über eine Busankopplung erfolgen, beispielsweise mittels eines Feldbusses bzw. Sensor-/Aktorbusses. Dies geschieht bevorzugt über den Steckkontakt, in den die Speichereinrichtung für die bauteilspezifischen Parameter integriert ist.

Vorteilhafterweise dient die Busankopplung neben der Übermittlung der bauteilspezifischen Parameter an die Steuerungseinrichtung der kunststoffverarbeitenden Maschine vor oder bei Inbetriebnahme des Bauteils auch der Übertragung von weiteren Signalen zwischen dem zumindest einen Bauteil und der Steuerungseinrichtung. Hierbei kann es sich beispielsweise um Messwerte handeln, die von an dem Bauteil angebrachten Sensoren an die Steuerungseinrichtung übertragen werden sowie um Steuersignale, die von der Steuerungseinrichtung an das Bauteil übermittelt werden. Im Fall einer Plastifiziereinheit können zu den Messwerten Signale von Weggebern, Drehzahlmessern oder Thermoelementen zählen, die Steuersignale gehen beispielsweise an den Drehantrieb, die Vorschubvorrichtung oder an Heizbänder in verschiedenen Mantelheizzonen.

Ein im Bereich der kunststoffverarbeitenden Maschinen häufig anzutreffender Fall ist der, dass die Sensoren Thermoelemente umfassen, die der Temperaturaufnahme an verschiedenen Stellen des Bauteils, beispielsweise entlang des Zylinders in Bereichen unterschiedlicher Mantelheizzonen dienen. Beim Einsatz solcher Thermoelemente ist es notwendig, beim Übergang auf Kabel aus einem unterschiedlichen Material, wie dies beispielsweise bei der Kontaktierung für die Übermittlung an die Steuerungseinrichtung geschieht, eine Temperaturkompensation vorzunehmen. Hierfür wird üblicherweise eine Ausgleichsleitung von dem Punkt der Kontaktierung zu dem Ort gelegt, an dem die Kompensation vorgenommen wird, was bei größeren Distanzen zwischen diesen beiden Punkten zu einem großen Kabel- und auch Platzbedarf führt. Dies ist auch ein zusätzlicher Kostenfaktor, da die Ausgleichsleitungen aus demselben Material wie die Thermoelemente bestehen müssen. Vorteilhafterweise erfolgt die Temperaturkompensation deshalb direkt an dem Übergang, im vorliegenden Fall direkt am Steckkontakt, wodurch man auf weiträumige Ausgleichsverdrahtung verzichten kann.

Bei kunststoffverarbeitenden Maschinen ist die Ansteuerung der Maschine zu einem hohen Grad insbesondere von den Parametern der eingesetzten Plastifiziereinheit abhängig. Erfingdungsgemäß wird also vorteilhaft die Plastifiziereinheit einer Spritzgießmaschine oder eines Extruders mit einer separaten Speichereinrichtung ausgestattet, in der die bauteilspezifischen Parameter der Plastifiziereinheit gespeichert sind. Vor oder bei Inbetriebnahme der Plastifiziereinheit werden diese an die Steuerungseinrichtung übermittelt. Plastifiziereinheiten umfassen im allgemeinen mindestens eine Schnecke und einen Zylinder mit mindestens einer Mantelheizzone, wobei jedoch auch Doppelschnecken-Extruder bzw. -Plastifiziereinheiten zum Einsatz kommen können und es durchaus üblich ist, dass ein Zylinder mehrere Mantelheizzonen aufweist.

In einer sehr vorteilhaften Ausführungsform ist die Speichereinrichtung als programmierbarer nichtflüchtiger Speicher, insbesondere als EEPROM (electrically erasable and programmable read only memory) ausgebildet, wodurch es möglich ist, auch nachträglich noch Änderungen in der Konfiguration vorzunehmen, beispielsweise eine zusätzliche Mantelheizzone vorzusehen, und diese Änderungen der bauteilspezifischen Parameter in der Speichereinrichtung zu hinterlegen, ohne einen Austausch der Speichereinrichtung vornehmen zu müssen.

Gemäß einer besonders bevorzugten Ausführungsform ist die Speichereinrichtung Teil eines dezentralen Steuerungsmoduls, das zur Steuerungseinrichtung der kunststoffverarbeitenden Maschine gehört, und das an das mindestens eine Bauteil ausgelagert ist. Auch dieses dezentrale. Steuerungsmodul kann direkt in den Steckkontakt integriert sein, wodurch eine gute Verbindung zur Steuerungseinrichtung über die Feldbusanbindung gewährleistet werden kann. So wird es möglich, die prozessierung bauteilspezifischer Steuerungsvorgänge direkt an dem Bauteil, insbesondere an dem Steckkontakt, über den die Verbindung mit der restlichen Steuerungseinrichtung erfolgt, durchzuführen, und dadurch den Verdrahtungsaufwand zu minimieren.

Vorteilhafterweise ist am Steckkontakt eine Spannungsversorgung vorgesehen, was insbesondere für den Betrieb eines dezentralen Steuerungsmoduls eine Voraussetzung ist.

Das Vorsehen separater Speichereinrichtungen, in denen bauteilsspezifische Parameter abgelegt sind, beschränkt sich aber nicht auf die Plastifiziereinheit, vielmehr können beliebige andere, zum Betrieb einer kunststoffverarbeitenden Maschine notwendige Bauteile, eigene Speichereinrichtungen aufweisen, von denen die bauteilspezifischen Parameter der Steuerungseinrichtung vor oder bei Inbetriebnahme des Bauteils übermittelbar sind. Hierfür bieten sich beispielsweise die Schließeinheit oder auch die Zuführvorrichtung bzw. Dosiervorrichtung für zu plastifizierendes Material an, aber auch separate, von der Plastifiziereinheit getrennte Einspritzvorrichtungen können damit ausgerüstet werden.

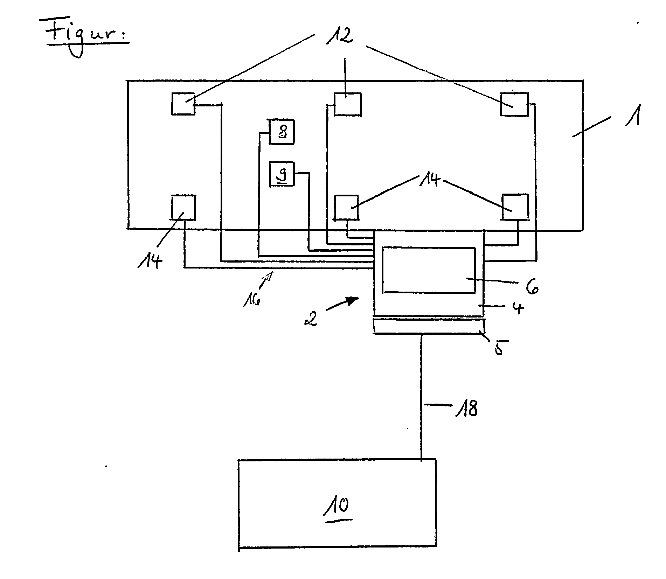

Im Folgenden soll die vorliegende Erfindung anhand eines in der Figur schematisch dargestellten, besonders bevorzugten Ausführungsbeispiels näher erläutert werden:

Eine nicht dargestellte Spritzgießmaschine mit einer speicherprogrammierbaren Steuerung (SPS) als Steuerungseinrichtung 10 umfasst weiter eine nur schematisch wiedergegebene Plastifiziereinheit 1 mit einer Plastifizierschnecke und einem Plastifizierzylinder, an der eine Steckverbindung 2 mit einem Steckkontakt 4 und einem Stecker 5 vorgesehen ist. Die Plastifiziereinheit 1 verfügt über verschiedene Sensoren 8 und Aktuatoren 9, von denen jeweils nur ein einziger exemplarisch dargestellt ist. Zu den Sensoren zählen auch separat dargestellte Thermoelemente 12, während Heizbänder 14 zu den Aktuatoren gehören. Sensoren und Aktuatoren sind über Verbindungsleitungen 16 mit dem Steckkontakt 4 verbunden. An den Steckkontakt 4 ist über den Stecker 5 ein Feldbus 18 angeschlossen, bei dem es sich beispielsweise um einen DIAS-Bus handeln kann. Über diesen Bus 18 erfolgt beim Betrieb der Plastifiziereinheit 1 die Übertragung von Messwerten von an bzw. in der Plastifiziereinheit 1 angebrachten Sensoren 8, wie beispielsweise den Thermoelementen 12, an die SPS 10, und andererseits von von der SPS 10 ausgegebenen Steuersignalen an die Aktuatoren 9, 14 der Plastifiziereinheit 1.

In den Steckkontakt 4 ist ein dezentrales Steuerungsmodul 6, wie es von verteilten Steuerungen bekannt ist, integriert. Das Steuerungsmodul 6 enthält zusätzlich eine nicht näher dargestellte Speichereinrichtung in Form eines EEPROM, in dem spezifische, die Plastifiziereinheit 1 charakterisierende Parameter hinterlegt sind, und die der SPS 10 bzw. deren dezentralem Steuerungsmodul 6 vor bzw. bei Inbetriebnahme der Plastifiziereinheit 1 übermittelt werden. Zu diesen spezifischen Parametern zählen im Fall der vorliegenden Plastifiziereinheit 1 einer Spritzgießmaschine beispielsweise der Zylinder- sowie der Schneckendurchmesser, der maximal erreichbare Spritzdruck, der maximal durch die Schnecke zurücklegbare Weg, das maximal aufbringbare Drehmoment sowie die maximal erreichbare Drehzahl, die Anzahl der Nuten der Schnecke und ggf. auch des Zylinders, das Längen-Durchmesser-Verhältnis der Schnecke, die maximal erlaubte Temperatur, die Anzahl der am Zylinder vorhandenen Mantelheizzonen, die erreichbare Heiz- sowie Kühlleistung je Zone sowie Informationen zu den Heizbändern. Weiters kann hinterlegt sein, mit welcher Art von Verschluss der Zylinder betrieben wird, d. h. ob es sich um einen offenen, einen mit einem Drehbolzen verschließbaren Zylinder o. ä. handelt. Auch andere beliebige bauteilspezifische Parameter können in dem EEPROM gespeichert sein.

Das im Steckkontakt 4 integrierte dezentrale Steuerungsmodul 6 mit Speichereinrichtung umfasst eine Spannungsversorgung und eine eigene Elektronik. Die Temperaturkompensation für den Betrieb von in den einzelnen Mantelheizzonen zur Überprüfung der tatsächlichen Temperatur angebrachten Thermoelementen 12 erfolgt direkt durch die im Steckkontakt 4 vorgesehene Elektronik, wodurch sich zusätzliche Ausgleichsleitungen vermeiden lassen, und man in der Anzahl der eingesetzten Thermoelemente 12 nicht beschränkt ist.

Der Einsatz des dezentralen Steuerungsmoduls 6 mit integrierter Speichereinrichtung an der Plastifiziereinheit 1 erlaubt es, eine Spritzgießmaschine mit den unterschiedlichsten Schnecken-Zylinder-Konfigurationen auszustatten, ohne die auf der SPS 10 laufenden Steuerungsprogramme jeweils an die neuen spezifischen Parameter anzupassen, da diese ja direkt in dem an der Plastifiziereinheit 1 vorgesehenen Steckkontakt 4 mit integrierter Speichereinrichtung vorliegen und von dort zu Beginn des Betriebs der Plastifiziereinheit von der SPS 10 eingelesen werden und somit in der Folge in den auf der SPS 10 ablaufenden Steuerungsprogrammen korrekt berücksichtigt werden können.

Dadurch ist es auch möglich, eine einheitliche Software für die SPS 10 für beliebige Zylinder-Schnecken-Konfigurationen einzusetzen, da die von der SPS ausgeführten Steuerungsprogramme die in die Algorithmen eingehenden bauteilspezifischen Parameter ja erst vor oder bei Inbetriebnahme der Plastifiziereinheit 1 übermittelt bekommen. Mit Inbetriebnahme ist hierbei jedes Hochfahren der Maschine und nicht nur dasjenige bei einer Erstinstallation gemeint. Hierdurch lässt sich der Aufwand für Logistik und Montage, aber auch für Dokumentation und Kundendienst reduzieren, da nicht mehr auf jede einzelne zum Einsatz kommende Konfiguration abgestellt werden muss, sondern ein Standard-Steuerungsprogramm alle möglichen Konfigurationen, oder zumindest jeweils mehrere Konfigurationsmöglichkeiten abdeckt. Zudem wird durch Verwendung eines standardisierten Steckkontaktes die Anbindung der Plastifiziereinheit 1 an die Steuerungseinrichtung 10 vereinfacht, es können auch hier weniger Fehler bei der Montage unterlaufen.

Der Austausch einer Plastifiziereinheit 1 in einer Spritzgießmaschine kann durch die erfindungsgemäße Lösung in Art einer "Plug- & Play-Version" erfolgen, wie man dies von Zusatzeinrichtungen am PC kennt, da außer dem Austausch der Plastifiziereinheit 1 bzw. der entsprechenden Komponenten der Plastifiziereinheit und dem Vorsehen des entsprechenden Steckkontaktes 4, auf dessen Speichereinrichtung die neuen spezifischen Bauteilparameter hinterlegt sind, keine weiteren Anpassungen an der Maschine bzw. an ihrer SPS 10 vorgenommen werden müssen.

Durch Verwendung einer nichtflüchtigen programmierbaren Speichereinrichtung, beispielsweise eines EEPROM's, ist es auch möglich, bei kleineren Modifikationen im Aufbau der Plastifiziereinheit 1 den Steckkontakt 4 unverändert zu lassen und nur eine Umprogrammierung der entsprechenden Parameter in der Speichereinrichtung vorzunehmen, was ohne großen Aufwand erfolgen kann.

Durch den Einsatz erfindungsgemäßer kunststoffverarbeitender Maschinen ergibt sich somit eine neue Flexibilität im Einsatz, und es kann ohne großen Aufwand eine Modifikation in der Schnecken-Zylinder-Konfiguration erfolgen.

### Bezugszeichenliste

- 1: Plastifiziereinheit
- 2: Steckverbindung
- 4: Steckkontakt
- 5: Stecker
- 6: dezentrales Steuerungsmodul
- 8: Sensor
- 9: Aktuator
- 10: Steuerungseinrichtung
- 12: Thermoelemente
- 14: Heizbänder
- 16: Verbindungsleitungen
- 18: Feldbus

## Patentansprüche

1. Kunststoffverarbeitende Maschine, insbesondere Spritzgießmaschine oder Extruder, mit
- zumindest einem durch spezifische Parameter **gekennzeichnet**en Bauteil zur Durchführung zumindest eines Arbeits- oder Verfahrensschrittes,
- einer Steuerungseinrichtung (10), die mit dem zumindest einen Bauteil verbunden und zur Steuerung des zumindest einen Bauteils ausgebildet ist, wobei die bauteilspezifischen Parameter in der Steuerungseinrichtung (10) zur Steuerung des Bauteils verwendbar sind,
wobei
das Bauteil eine Schließeinheit, eine Zuführ- und Dosiervorrichtung, eine Plastifiziereinheit, eine Einspritzeinheit oder eine separate Einspritzvorrichtung ist und für das Bauteil eine separate Speichereinrichtung vorgesehen ist, welche die bauteilspezifischen Parameter des Bauteils speichert,
**dadurch gekennzeichnet, dass**
vor oder bei Inbetriebnahme des Bauteils bauteilspezifische Parameter an die Steuerungseinrichtung (10) zum Einfügen als Parameter in ein Steuerungsprogramm übermittelbar sind.

2. Kunststoffverarbeitende Maschine nach Anspruch 1,
**dadurch gekennzeichnet, dass**
am Bauteil eine Steckverbindung (2) vorgesehen ist, über die das Bauteil mit der Steuerungseinrichtung (10) verbindbar ist und in die die Speichereinrichtung integriert ist.

3. Kunststoffverarbeitende Maschine nach Anspruch 2,
**dadurch gekennzeichnet, dass**
die Steckverbindung (2) einen Steckkontakt (4) und einen Stecker (5) umfasst, wobei der Steckkontakt (4) die Speichereinrichtung enthält und am Bauteil angebracht ist.

4. Kunststoffverarbeitende Maschine nach einem der Ansprüche 1 - 3,
**dadurch gekennzeichnet, dass**
für die Verbindung der Steuerungseinrichtung (10) mit dem zumindest einen Bauteil eine Busankopplung vorgesehen ist.

5. Kunststoffverarbeitende Maschine nach Anspruch 4,
**dadurch gekennzeichnet, dass**
die Busankopplung für die Übermittlung der bauteilspezifischen Parameter und die Übertragung von weiteren Signalen zwischen dem zumindest einen Bauteil und der Steuerungseinrichtung (10) vorgesehen ist.

6. Kunststoffverarbeitende Maschine nach Anspruch 5,
**dadurch gekennzeichnet, dass**
die Signale Messwerte von an dem Bauteil angebrachten Sensoren (8) und Steuersignale von der Steuerungseinrichtung an Aktuatoren (9) des Bauteils umfassen.

7. Kunststoffverarbeitende Maschine nach Anspruch 6,
**dadurch gekennzeichnet, dass**
die Sensoren Thermoelemente (12) umfassen.

8. Kunststoffverarbeitende Maschine nach Anspruch 7,
**dadurch gekennzeichnet, dass**
eine Temperaturkompensation für die Thermoelemente (12) direkt am Steckkontakt (4) vorgesehen ist.

9. Kunststoffverarbeitende Maschine nach einem der Ansprüche 1 - 8,
**dadurch gekennzeichnet, dass**
die Plastifiziereinheit (1) mindestens eine Schnecke und einen Zylinder mit mindestens einer Mantelheizzone umfasst.

10. Kunststoffverarbeitende Maschine nach einem der Ansprüche 1 - 9,
**dadurch gekennzeichnet, dass**
als Speichereinrichtung ein nichtflüchtiger programmierbarer Speicher vorgesehen ist.

11. Kunststoffverarbeitende Maschine nach einem der Ansprüche 1 - 10,
**dadurch gekennzeichnet, dass**
ein dezentrales Steuerungsmodul (6) der Steuerungseinrichtung (10), das die Speichereinrichtung umfasst, an dem mindestens einen Bauteils vorgesehen ist.

12. Kunststoffverarbeitende Maschine nach Anspruch 11,
**dadurch gekennzeichnet, dass**
das dezentrale Steuerungsmodul (6) in den Steckkontakt (4) integriert ist.

13. Kunststoffverarbeitende Maschine nach einem der Ansprüche 3 - 12,
**dadurch gekennzeichnet, dass**
am Steckkontakt (4) eine Spannungsversorgung vorgesehen ist.

14. Kunststoffverarbeitende Maschine nach einem der Ansprüche 1 - 13,
**dadurch gekennzeichnet, dass**
mehrere Bauteile mit separaten Speichereinrichtungen vorgesehen sind, in denen jeweils die spezifischen Parameter des jeweiligen Bauteils abgespeichert sind, und die der Steuerungseinrichtung vor oder bei Inbetriebnahme der Bauteile übermittelbar sind.

## Claims

1. A plastics processing machine, in particular injection molding machine or extruder, comprising
- at least one component **characterized by** component-specific parameters for carrying out at least one working or process step,
- a control device (10) which is connected to the at least one component and configured to control the at least one component, wherein the component-specific parameters are useable in the control device for control of the component,
wherein the component is a clamping unit, a feeding and metering apparatus, a plasticizing unit or a separate injection apparatus, and a separate memory device storing the component-specific parameters is provided for the component,
**characterized in that**
prior to or upon startup of operation of the component, component-specific parameters are transmittable to the control device (10) for introduction into a control program as parameters.

2. A plastics processing machine according to claim 1,
**characterized in that**
the component has a plug connection (2) for allowing connection of the component to the control device (10), said memory device being integrated in the plug connection.

3. A plastics processing machine according to claim 2,
**characterized in that**
wherein the plug connection (2) includes a plug contact (4) and a plug (5), with the plug contact (4) accommodating the memory device and mounted onto the component.

4. A plastics processing machine according to one of claims 1-3,
**characterized in that**
a bus connection is provided for connecting the control device (10) to the at least one component.

5. A plastics processing machine according to claim 4,
**characterized in that**
the bus connection for the transfer of the component-specific parameters and the transfer of further signals is provided between the at least one component and the control device (10).

6. A plastics processing machine according to claim 5,
**characterized in that**
the signals include measuring values of sensors (8) mounted to the component and control signals from the control device to the actuators (9) of the component.

7. A plastics processing machine according to claim 6,
**characterized in that**
the sensors comprise thermocouples (12).

8. A plastics processing machine according to claim 7,
**characterized in that**
a temperature compensation for the thermocouples (12) is provided directly at the plug contact (4).

9. A plastics processing machine according to one of claims 1-8,
**characterized in that**
a the plasticizing unit (1) includes at least one screw and one cylinder with at least one external heating zone.

10. A plastics processing machine according to one of claims 1-9.
**characterized in that**
the memory device is a non-volatile programmable memory.

11. A plastics processing machine according to one of claims 1-10,
**characterized in that**
a decentralized control module (6) of the control device (10), comprising the memory device, is provided at the at least one component.

12. A plastics processing machine according to claim 11,
**characterized in that**
the decentralized control module (6) is integrated in the plug contact (4).

13. A plastics processing machine according to one of claims 3-12,
**characterized in that**
a voltage supply is provided at the plug contact (4).

14. A plastics processing machine according to one of claims 1-13,
**characterized in that**
a plurality of components with separate memory devices is provided, the memory devices storing the component-specific parameters, the specific parameters being transmittable to the control device prior to or upon startup of operation of the components.

## Revendications

1. Machine de traitement du plastique, en particulier machine de moulage par injection ou extrudeuse, avec
- au moins un composant **caractérisé par** des paramètres spécifiques pour la réalisation d'au moins une étape de travail ou de procédé,
- un dispositif de commande (10), qui est relié à l'au moins un composant et est réalisé pour la commande de l'au moins un composant, les paramètres spécifiques au composant dans le dispositif de commande (10) pouvant être utilisés pour la commande du composant,
le composant étant une unité de fermeture, un dispositif d'alimentation et de dosage, une unité de plastification, une unité d'injection ou un dispositif d'injection séparé, et un dispositif d'enregistrement séparé, qui met en mémoire les paramètres spécifiques au composant, étant prévu pour le composant,
**caractérisée en ce que**
avant ou lors de la mise en service du composant, des paramètres spécifiques au composant peuvent être transférés au dispositif de commande (10) pour les ajouter comme paramètres dans un programme de commande.

2. Machine de traitement du plastique selon la revendication 1,
**caractérisée en ce que**
un connecteur à fiche (2), par le biais duquel le composant peut être relié au dispositif de commande (10) et dans lequel le dispositif d'enregistrement est intégré, est prévu au niveau du composant.

3. Machine de traitement du plastique selon la revendication 2,
**caractérisée en ce que**
le connecteur à fiche (2) comprend un contact à fiche (4) et une fiche (5), le contact à fiche (4) contenant le dispositif d'enregistrement et étant monté sur le composant.

4. Machine de traitement du plastique selon l'une quelconque des revendications 1 à 3,
**caractérisée en ce que**
un coupleur de bus est prévu pour le raccordement du dispositif de commande (10) à l'au moins un composant.

5. Machine de traitement du plastique selon la revendication 4,
**caractérisée en ce que**
le coupleur de bus est prévu pour la transmission des paramètres spécifiques au composant et le transfert d'autres signaux entre l'au moins un composant et le dispositif de commande (10).

6. Machine de traitement du plastique selon la revendication 5,
**caractérisée en ce que**
les signaux englobent des valeurs mesurées par des capteurs (8) montés sur le composant et des signaux de commande du dispositif de commande à des actionneurs (9) du composant.

7. Machine de traitement du plastique selon la revendication 6,
**caractérisée en ce que**
les capteurs comprennent des thermocouples (12).

8. Machine de traitement du plastique selon la revendication 7,
**caractérisée en ce que**
une compensation thermique pour les thermocouples (12) est prévue directement au niveau du contact à fiche (4).

9. Machine de traitement du plastique selon l'une quelconque des revendications 1 à 8,
**caractérisée en ce que**
l'unité de plastification (1) comporte au moins une vis sans fin et un cylindre avec au moins une zone de chauffage d'enveloppe.

10. Machine de traitement du plastique selon l'une quelconque des revendications 1 à 9,
**caractérisée en ce que**
une mémoire programmable non volatile est prévue comme dispositif d'enregistrement.

11. Machine de traitement du plastique selon l'une quelconque des revendications 1 à 10,
**caractérisée en ce que**
un module de commande décentralisé (6) du dispositif de commande (10), qui comporte le dispositif d'enregistrement, est prévu au niveau de l'au moins un composant.

12. Machine de traitement du plastique selon la revendication 11,
**caractérisée en ce que**
le module de commande décentralisé (6) est intégré dans le contact à fiche (4).

13. Machine de traitement du plastique selon l'une quelconque des revendications 3 à 12,
**caractérisée en ce que**
une alimentation en courant est prévue au niveau du contact à fiche (4).

14. Machine de traitement du plastique selon l'une quelconque des revendications 1 à 13,
**caractérisée en ce que**
plusieurs composants sont prévus avec des dispositifs d'enregistrement séparés, dans lesquels respectivement les paramètres spécifiques du composant respectif sont enregistrés, et qui peuvent être transmis au dispositif de commande avant ou lors de la mise en service des composants.
